# EUROPEAN PATENT SPECIFICATION

(11) **EP 2 320 650 B1**
(45) Date of publication and mention of the grant of the patent: **04.06.2014**
(21) Application number: 10003067.5
(22) Date of filing: 23.03.2010
(51) Int. Cl.: H04N 7/173, H04N 5/445

(54) **Method of processing application in digital broadcast receiver connected with interactive network and the digital broadcast receiver**
Verfahren zur Verarbeitung einer Anwendung in einem digitalen Rundfunkempfänger, die mit einem interaktiven Netz und dem digitalen Rundfunkempfänger verbunden ist
Procédé de traitement d'application dans un récepteur de diffusion numérique connecté à un réseau interactif et récepteur de diffusion numérique

(30) Priority: 20.10.2009 US 253489 P; 30.12.2009 US 290887 P
(43) Date of publication of application: 11.05.2011
(73) Proprietor: LG ELECTRONICS INC., Yeongdeungpo-gu Seoul 150-721 (KR)
(72) Inventor: Lee, Joon Hui, Seoul 137-724 (KR); Choi, Jong Sung, Seoul 137-724 (KR); Lee, Ho Min, Seoul 137-724 (KR); Hong, Ho Taek, Seoul 137-724 (KR)
(74) Representative: Katérle, Axel

(56) References cited:
- WO-A1-00/27116
- US-A1- 2003 217 369
- US-A1- 2006 184 965
- US-A1- 2008 235 728

## Description

### DETAILED DESCRIPTION OF THE INVENTION

### TECHNICAL FIELD

The present invention relates to a digital broadcast receiver, and more particularly, to a method of processing applications in a digital broadcast receiver connected with an interactive network.

### BACKGROUND ART

Recently, IPTV (Internet Protocol TeleVision) or bidirectional TV, which has bidirectional characteristics, has been discussed. However, a protocol that processes a plurality of applications efficiently and provides a user with a customized user interface (UI) has not been defined.

US 2003/0217369 A1 relates to a flexible application information formulation, wherein a protocol enables flexible formulation of application information data structures for television-based entertainment systems. The protocol may be a textual-based language such as markup language, including an extensible markup language. The application information data structure includes information that enables a client device to access and/or to activate one or more applications. The one or more applications may be software modules, files, images, text, executable programs, and so forth, including both bound and unbound applications. An application information data structure, or table, may be created at a headend of a television system and stored there in memory. The application information table may also be transmitted from the headend to a client device and stored in a memory of the client device. The client device is able to determine the existence of, and relevant parameters for utilizing, applications at the client device using the application information table.

### DESCRIPTION OF THE INVENTION

### TECHNICAL PROBLEMS

Accordingly, the present invention is directed to a method of processing application in a digital broadcast receiver connected with an interactive network, which substantially obviates one or more problems due to limitations and disadvantages of the related art.

An object of the present invention is to provide a method of processing a plurality of applications efficiently.

Another object of the present invention is to provide a protocol that processes a plurality of applications efficiently and at the same time provides a user with a customized user interface (UI).

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### TECHNICAL SOLUTIONS

To achieve these objects and other advantages and in accordance with the purpose of the invention, as embodied and broadly described herein, a method of processing an application in a digital broadcast receiver connected with an interactive network comprises receiving, from a broadcast network, a broadcast audio/video (A/V) content and an application information table (AIT) data; receiving, from an interactive network, at least one of applications; identifying applications with a control code of autostart or present among the at least one of applications; and displaying a list indicating the identified applications.

In another aspect of the present invention, a method of processing an application in a digital broadcast receiver connected with an interactive network comprises receiving, from a broadcast network, a broadcast audio/video (A/V) content and an application information table (AIT) data; receiving, from an interactive network, at least one of applications; collecting applications included in the same group among the at least one of applications, wherein the same group corresponds to applications intended to be used together; and displaying a list indicating the collected applications.

In still another aspect of the present invention, a digital broadcast receiver connected with an interactive network for processing an application comprises a first receiving unit configured to receive, from a broadcast network, a broadcast audio/video (A/V) content and an application information table (AIT) data; a second receiving unit configured to receive, from an interactive network, at least one of applications; a controller configured to identify applications with a control code of autostart or present among the at least one of applications; and a displaying unit configured to display a list indicating the identified applications.

In further still another aspect of the present invention, a digital broadcast receiver connected with an interactive network for processing an application comprises a first receiving unit configured to receive, from a broadcast network, a broadcast audio/video (A/V) content and an application information table (AIT) data; a second receiving unit configured to receive, from an interactive network, at least one of applications; a controller configured to collect applications included in the same group among the at least one of applications, wherein the same group corresponds to applications intended to be used together; and a displaying unit configured to display a list indicating the collected applications.

### ADVANTAGEOUS EFFECTS

According to the embodiments of the present invention, a method of processing a plurality.of applications efficiently is provided.

Also, a protocol that processes a plurality of applications efficiently and at the same time provides a user with a customized user interface (UI) is provided.

It is to be understood that the advantages that can be obtained by the present invention are not limited to the aforementioned advantages and other advantages which are not mentioned will be apparent from the following description to the person with an ordinary skill in the art to which the present invention pertains.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a diagram illustrating a whole system according to one embodiment of the present invention;
FIG. 2 is a diagram illustrating syntax of an application information table (AIT) according to one embodiment of the present invention;
FIG. 3 is a diagram illustrating a group descriptor, which is added to the AIT shown in FIG. 2, according to one embodiment of the present invention;
FIG. 4 is a diagram illustrating a group descriptor, which is added to the AIT shown in FIG. 2, according to another embodiment of the present invention;
FIG. 5 is a diagram illustrating an example of a service scenario using the group descriptor shown in FIG. 3 or FIG. 4;
FIG. 6 is a diagram illustrating another example of a service scenario using the group descriptor shown in FIG. 3 or FIG. 4;
FIG. 7 is a diagram illustrating other example of a service scenario using the group descriptor shown in FIG. 3 or FIG. 4;
FIG. 8 is a flow chart illustrating a service scenario using the group descriptor shown in FIG. 3 or FIG. 4;
FIG. 9 is a diagram illustrating a group descriptor, which is added to the AIT shown in FIG. 2, according to another embodiment of the present invention;
FIG. 10 is a diagram illustrating an example of a service scenario using the group descriptor shown in FIG. 9;
FIG. 11 is a diagram illustrating another example of a service scenario using the group descriptor shown in FIG. 9;
FIG. 12 is a flow chart illustrating a service scenario using the group descriptor shown in FIG. 9;
FIG. 13 is a diagram illustrating an example of signaling of group application information using HTML header in accordance with one embodiment of the present invention;
FIG. 14 is a diagram illustrating another example of signaling of group application information using HTML header in accordance with one embodiment of the present invention;
FIG. 15 is a diagram illustrating a first embodiment where a list of a plurality of applications is displayed in accordance with one embodiment of the present invention;
FIG. 16 is a diagram illustrating a second embodiment where a list of a plurality of applications is displayed in accordance with one embodiment of the present invention;
FIG. 17 is a diagram illustrating a third embodiment where a list of a plurality of applications is displayed in accordance with one embodiment of the present invention;
FIG. 18 is a diagram illustrating a fourth embodiment where a list of a plurality of applications is displayed in accordance with one embodiment of the present invention;
FIG. 19 is a diagram illustrating an enlarged view of the group descriptor of FIG. 3;
FIG. 20 is a diagram illustrating an enlarged view of the group descriptor of FIG. 4;
FIG. 21 is a diagram illustrating a fifth embodiment where a list of a plurality of applications is displayed in accordance with one embodiment of the present invention;
FIG. 22 is a diagram illustrating detailed information of application in accordance with one embodiment of the present invention;
FIG. 23 is a diagram illustrating a sixth embodiment where a list of a plurality of applications is displayed in accordance with one embodiment of the present invention;
FIG. 24 is a diagram illustrating a digital broadcast receiver according to one embodiment of the present invention;
FIG. 25 is a diagram illustrating a digital broadcast receiver according to another embodiment of the present invention;
FIG. 26 is a flow chart illustrating a method for controlling a digital broadcast receiver according to one embodiment of the present invention;
FIG. 27 is a flow chart illustrating a method for controlling a digital broadcast receiver according to another embodiment of the present invention;
FIG. 28 is a diagram illustrating an electronic program guide (EPG) displayed in accordance with one embodiment of the present invention; and
FIG. 29 is a diagram illustrating another example of the electronic program guide (EPG) shown in FIG. 28.

### BEST MODE FOR CARRYING OUT THE INVENTION

Reference will now be made in detail to the preferred embodiments of the present invention, examples of which are illustrated in the accompanying drawings. Wherever possible, the same reference numbers will be used throughout the drawings to refer to the same or like parts.

Hereinafter, the embodiments of the present invention will be described with reference to the accompanying drawings and the description disclosed in the accompanying drawings, but the present invention is not limited by the embodiments.

Although the terms used in the present invention are selected from generally known and used terms considering their functions in the present invention, the terms may be modified depending on intention of a person skilled in the art, practices, or the advent of new technology. Also, in special case, the terms mentioned in the description of the present invention may be selected by the applicant at his or her discretion, the detailed meanings of which are described in relevant parts of the description herein. Accordingly, the terms used herein should be understood not simply by the actual terms used but by the meaning lying within and the description disclosed herein.

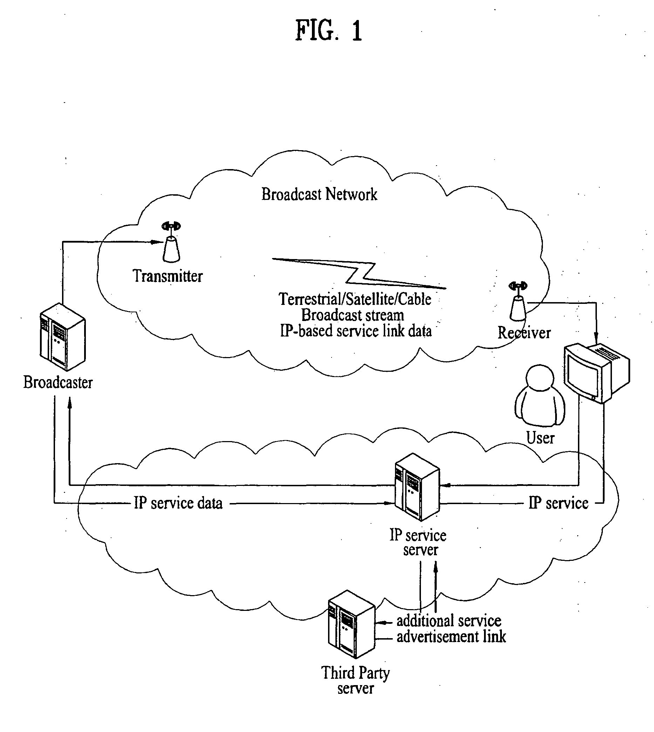

FIG. 1 is a diagram illustrating a whole system according to one embodiment of the present invention. If the system shown in FIG. 1 is used, a digital broadcast receiver provided for each home can access Internet as well as receive a digital TV broadcast signal.

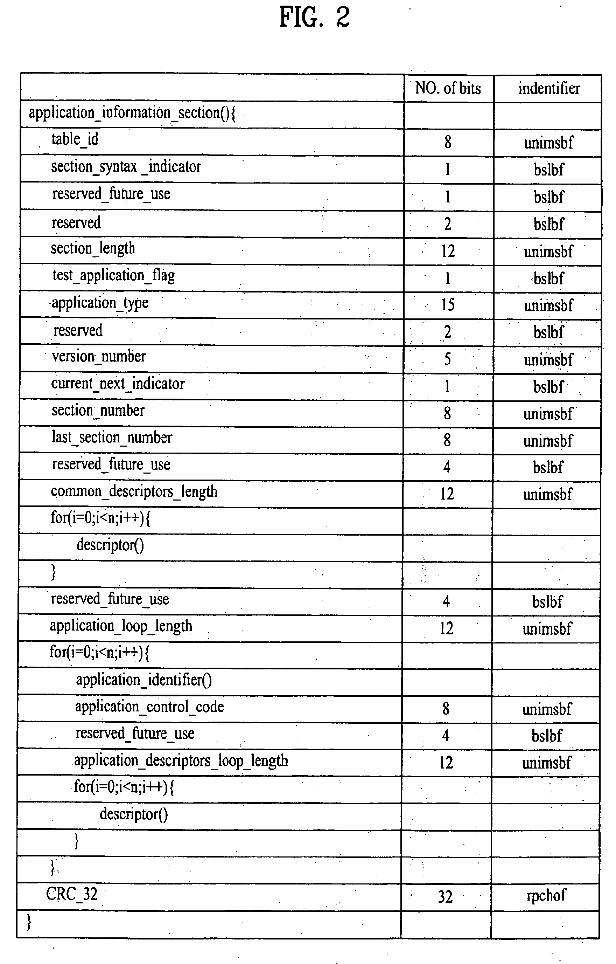

FIG. 2 is a diagram illustrating syntax of an application information table (AIT) according to one embodiment of the present invention. For signaling of an application included in a digital broadcast channel service, AIT data of FIG. 2 can be used. Each of the AIT data shown in FIG. 2 can be transmitted per service, and includes information all available applications within the corresponding service.

Also, as shown in FIG. 2, the AIT data includes a common loop (outer loop), which includes a descriptor commonly applied to all applications, and an allocation loop (inner loop) applied for each application.

The aforementioned application is identified by an application identifier, and a control code is used to control a status of the application. Fields of the AIT data shown in FIG. 2 will be described as follows.

table_id - This 8 bit integer with value 0x74 identifies this table.

section_syntax _indicator The section_syntax_indicator is a 1-bit field which shall be set to "1".

scction_length - This is a 12-bit field, the first two bits of which shall be "00". The remaining 10 bits specify the number of bytes of the section starting immediately following the section_length field, and including the CRC_32. The value in this field shall not exceed 1021 (0x3FD).

test_application_flag - This 1-bit field when set indicates an application which is transmitted for the purposes of receiver testing and which shall not be started or listed in any API or displayed in any user interface by receivers under normal operational conditions. The means (if any) by which a receiver is put into a mode where applications signaled with this bit set are treated as if this field is set to zero is implementation dependent but should not be one which typical end-users might discover on their own.

application_type - This is a 15-bit field which identifies the type of the applications described in this AIT sub_table.

version_number - This 5-bit field is the version number of the sub_table. The version_number shall be incremented by 1 when a change in the information carried within the sub_table occurs. When it reaches value "3 1 ", it wraps around to "0".

current_next_indicator - This 1-bit indicator shall be set to "1".

section_number - This 8-bit field gives the number of the section. The section_number of the first section in the sub_table shall be "0x00". The section_number shall be incremented by 1 with each additional section with the same table id, and application_type.

last_section_number - This 8-bit field specifies the number of the last section (that is, the section with the highest section_number) of the sub_table of which this section is part.

common_descriptors_length - This 12-bit field gives the total length in bytes of the following descriptors. The descriptors in this descriptor loop apply for all of the applications contained in this AIT sub_table.

application_control_code - This 8-bit field controls the state of the application. The semantics of this field is application type dependant.

application_loop_length - This 12-bit field gives the total length in bytes of the following loop containing application information.

application_identifier0 - This 48 bit field identifies the application.

application_descriptors_loop_length - This 12-bit field gives the total length in bytes of the following descriptors. The descriptors in this loop apply to the specific application.

CRC_32 - This is a 32-bit field that contains the CRC value that gives a zero output of the registers in the decoder.

According to one embodiment of the present invention, to process applications corresponding to IP channel based additional services, Internet channel services associated with one application are grouped. Accordingly, preloading is performed for the grouped application, whereby processing speed of the IP channel based additional services can be increased. Also, a list of the application groups is provided, whereby convenience of a user can be increased. This will now be described in more detail.

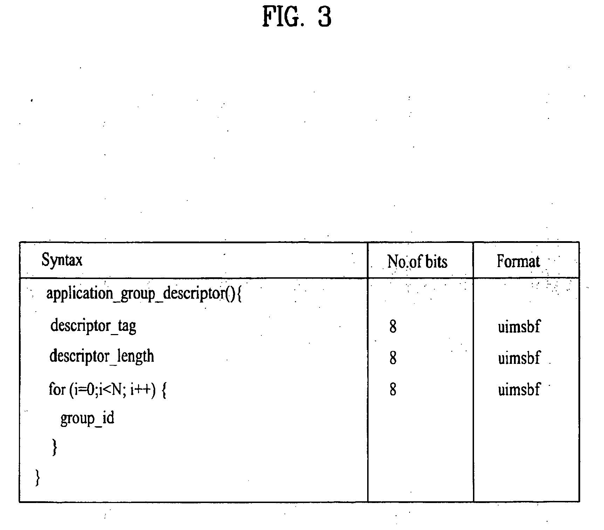

FIG. 3 is a diagram illustrating a group descriptor, which is added to the AIT shown in FIG. 2, according to one embodiment of the present invention. The group descriptor shown in FIG. 3 is located in the application loop (inner loop) of the AIT shown in FIG. 2, and indicates ID of a group to which each application belongs. Each field will be described as follows.

"descriptor_tag" field indicates a current descriptor, and has a unique value.

"descriptor_length" field indicates a length of an entire descriptor.

"group_id" field is an identifier of a group associated with an application loop to which application_group_descriptor belongs. Since applications signaled by the same group_id of the application loop of the AIT are all loaded together, they can be navigated promptly.

For example, application 1 is first loaded. A group corresponding to the loaded application 1 is identified using the group_id field of the group descriptor shown in FIG. 3. Then, application 2 signaled by the same group_id as that of the identified group is downloaded (applications having another group_id are disregarded). The application 2 is decoded, and a lower component required for decoding of the application 2 is downloaded. If a command signal indicating conversion to application 2 is received from a user, the application 2 is immediately loaded and then displayed in the screen. Accordingly, loading and processing speed of the application 2 can be increased remarkably. Also, since the AIT is used for both DSM-CC (dvb://∼) and IP (http://∼), the descriptor shown in FIG. 3 can be applied to the aforementioned two protocols.

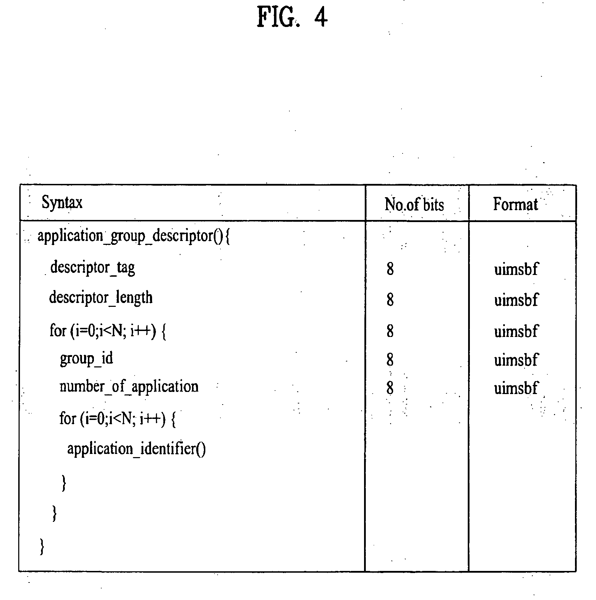

FIG. 4 is a diagram illustrating a group descriptor, which is added to the AIT shown in FIG. 2, according to another embodiment of the present invention. Unlike FIG. 3, the descriptor of FIG. 4 is located in a common loop (outer loop) of the AIT shown in FIG. 3, and signals information of all groups of each application. For example, the descriptor shown in FIG. 4 provides information as to how many groups of the application are signaled by the current AIT and which application belongs to each group. Each field will be described as follows.

"descriptor_tag" field indicates a current descriptor, and has a unique value.

"descriptor_length" field indicates a length of an entire descriptor.

"group_id" field is an identifier of a group associated with an application loop to which application_group_descriptor belongs. Since applications signaled by the same group_id of the application loop of the AIT are all loaded together; they can be navigated promptly.

"number_of application" field indicates the number of applications which belongs to the group_id field.

"application_identifier" field is to identify each application. For example, the "application_identifier" field may perform the same function as that of the field of the same name used in the AIT.

For example, application 1 is first loaded. A group corresponding to the loaded application 1 is identified using the group_id field of the group descriptor shown in FIG. 4. Then, application 2 signaled by the same group_id as that of the identified group is downloaded (applications having another group_id are disregarded). The application 2 is decoded, and a lower component required for decoding of the application 2 is downloaded. If a command signal indicating conversion to application 2 is received from a user, the application 2 is immediately loaded and then displayed in the screen. Accordingly, loading and processing speed of the application 2 can be increased remarkably. Also, since the AIT is used for both DSM-CC (dvb://∼) and IP (http://∼), the descriptor shown in FIG. 4 can be applied to the aforementioned two protocols.

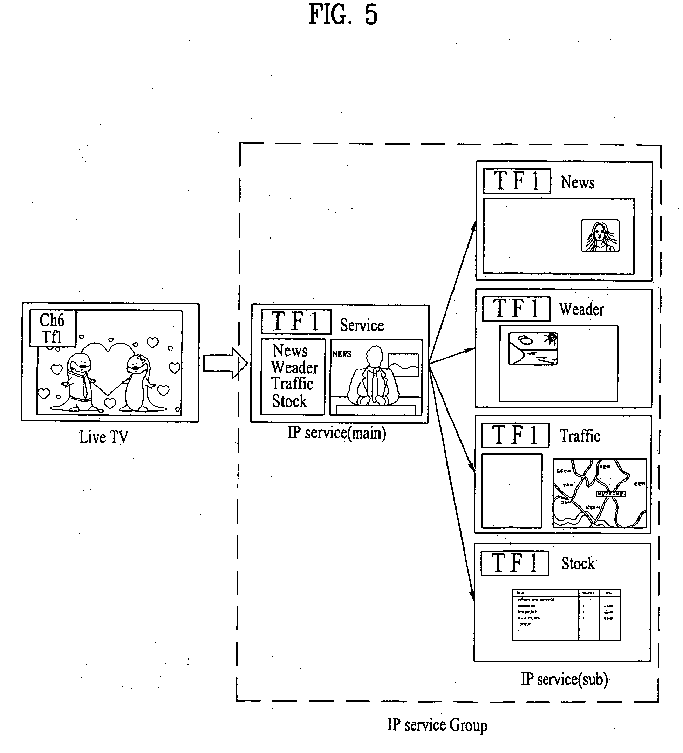

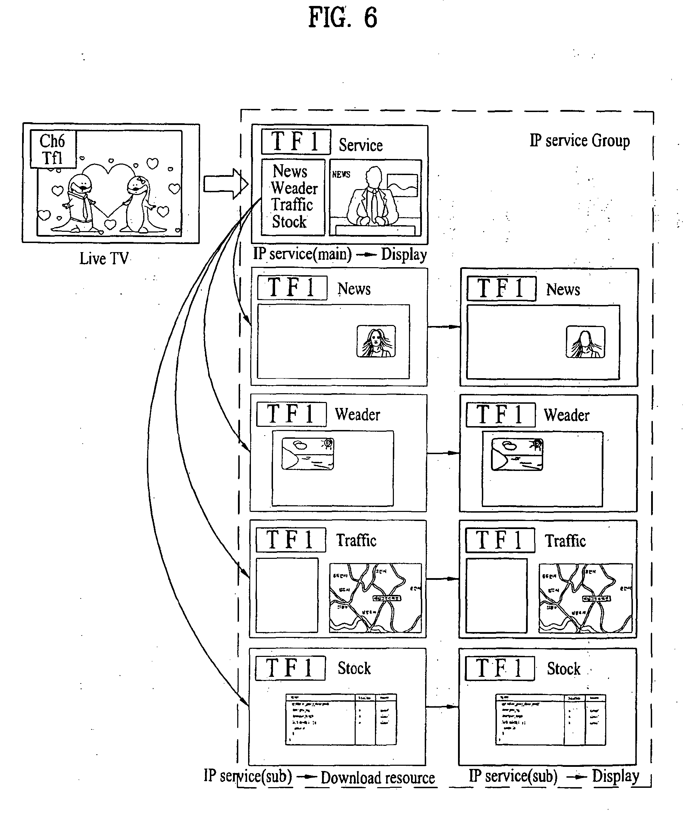

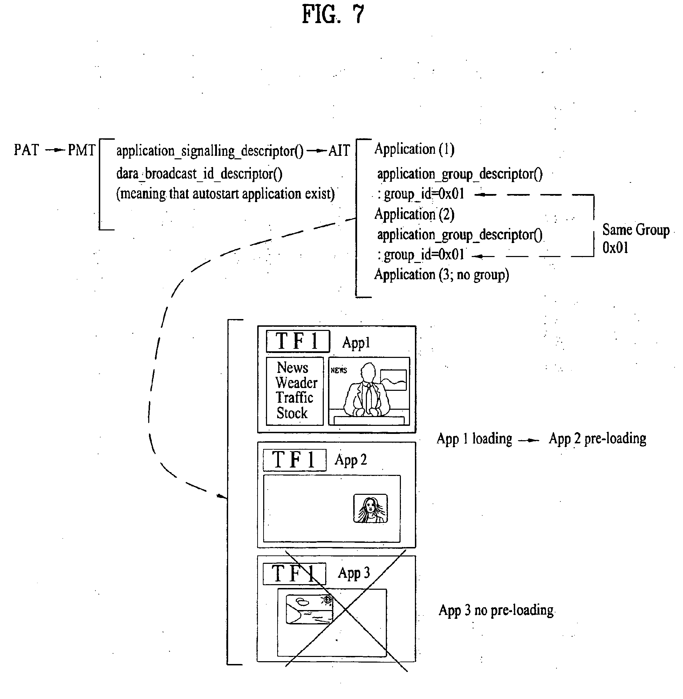

FIG. 5 is a diagram illustrating an example of a service scenario using the group descriptor shown in FIG. 3 or FIG. 4. FIG. 6 is a diagram illustrating another example of a service scenario using the group descriptor shown in FIG. 3 or FIG. 4. FIG. 7 is a diagram illustrating other example of a service scenario using the group descriptor shown in FIG. 3 or FIG. 4.

As shown in FIG. 5, it is supposed that a main page, which provides a random IP service, and four sub pages belong to the same IP service group. In this case, as shown in FIG. 6, while an application corresponding to the main page is being executed, applications corresponding to the four sub pages are preloaded. Accordingly, even if the user selects any one of the sub pages, the application corresponding to the selected sub page can be executed promptly.

Moreover, as shown in FIG. 7, a signaling process of the aforementioned AIT and the aforementioned group descriptor may be performed based on a program association table (PAT) and a program map table (PMT). Also, as shown in FIG. 7, the application 2 having the same group id as that of the application 1 is preloaded while the application 1 is being loaded. On the other hand, no pre-loading is performed for application 3 having no group id the same as that of the application 1.

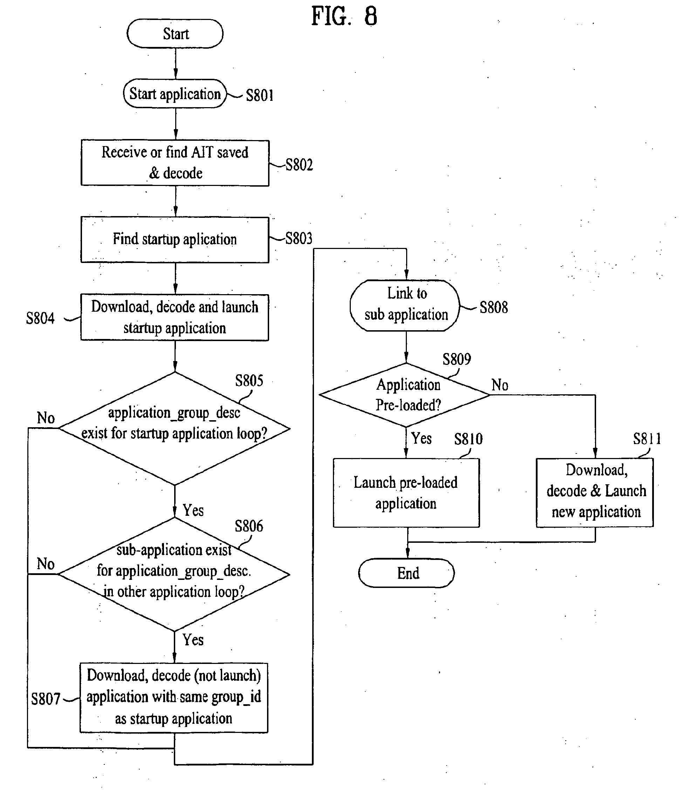

FIG. 8 is a flow chart illustrating a service scenario using the group descriptor shown in FIG. 3 or FIG. 4. Referring to FIG. 8, steps of preloading group applications from the process of signaling AIT will be described as follows.

As show in FIG. 8, a digital broadcast receiver according to one embodiment of the present invention receives a command for starting a random application (S801). The digital broadcast receiver receives AIT (S802), and finds a startup application (S803). The digital broadcast receiver downloads, decodes and launches the startup application (S804).

The digital broadcast receiver determines whether the group descriptor exists within the AIT (S805). As a result, if the group descriptor exists within the AIT, the digital broadcast receiver determines whether a group descriptor having the same group id exists within another application loop (S806). As a result, if such a group descriptor exists within the application loop, the digital broadcast receiver downloads and decodes other application having the same group id as that of the startup application (however, the digital broadcast receiver does not launch the application) (S807). The digital broadcast receiver is linked to the other application (S808).

The digital broadcast receiver determines whether the other application is preloaded (S809). As a result, if the other application is preloaded, the digital broadcast receiver launches the preloaded application (S810). On the other hand, if the other application is not preloaded, the digital broadcast receiver downloads, decodes and launches a new application (S811).

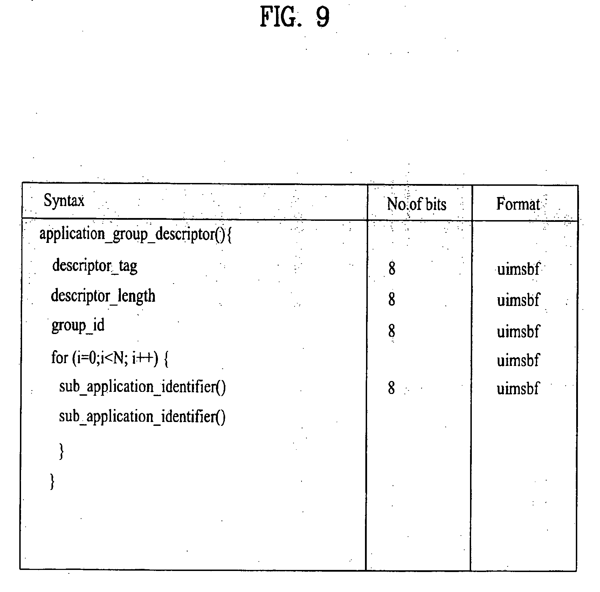

FIG. 9 is a diagram illustrating a group descriptor, which is added to the AIT shown in FIG. 2, according to another embodiment of the present invention.

The group descriptor shown in FIG. 9 is located in an application loop (inner loop) of the AIT, provides a list of sub applications linked with the current application and group id of each application. In case of FIG. 3 and FIG. 4, applications associated with one another are together loaded. However, in case of FIG. 9, among low applications of the current loaded application, application that requires preloading is listed and then signaled, whereby loading to a lower page can be performed promptly. Meanwhile, each field will be described as follows.

"descriptor_tag" field indicates a current descriptor, and has a unique value. "descriptor_length" field indicates a length of an entire descriptor.

"group_id" field is an identifier of a group associated with an application loop to which application_group_descriptor belongs. Since applications signaled by the same group_id of the application loop of the AIT are all loaded together, they can be navigated promptly.

"sub_application_identifier" field indicates an identifier of a lower application associated with the current application. Also, access information of the lower application can be acquired through the application loop matched with a value of application identifier field of the AIT.

"sub_application_priority" field indicates priority information for identifying which sub application of several sub applications should first be processed after the current application is loaded.

The digital broadcast receiver according to one embodiment of the present invention first loads a red button application. The red button application may mean application when a control code field value is autostart, for example. The control code and autostart will be described in more detail.

The digital broadcast receiver identifies a list of lower applications of the red button application by using the group descriptor shown in FIG. 9. Also, the digital broadcast receiver downloads a main application among the applications registered in the list. Moreover, the digital broadcast receiver decodes the main application and downloads a lower component required for decoding. If the red button is pushed by the user, etc., the main application can be displayed on the screen immediately.

Subsequently, the digital broadcast receiver identifies the list of the lower applications of the main application by using the group descriptor shown in FIG. 9. Also, the digital broadcast receiver downloads a sub application of the applications registered in the list. Moreover, the digital broadcast receiver decodes the sub application and downloads a lower component required for decoding. If the sub application is selected by the user, etc., the sub application can be displayed on the screen immediately.

Also, since the AIT is used for both DSM-CC (dvb://∼) and IP (htt://∼), the descriptor shown in FIG. 9 can be applied to the aforementioned two protocols.

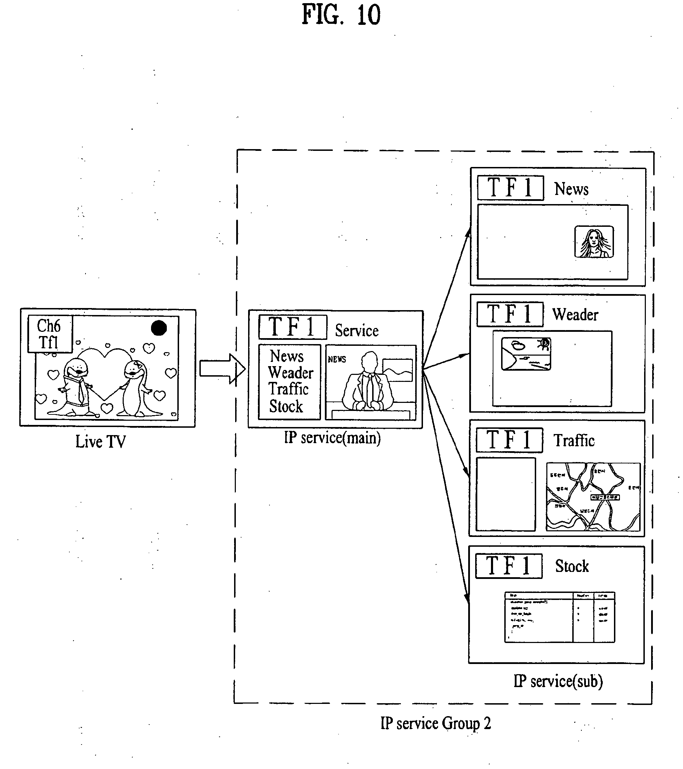

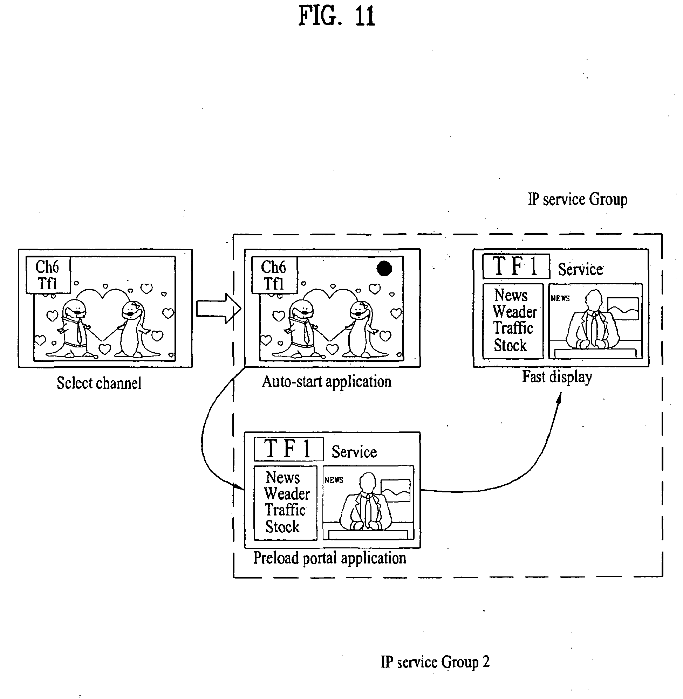

FIG. 10 is a diagram illustrating an example of a service scenario using the group descriptor shown in FIG. 9. FIG. 11 is a diagram illustrating another example of a service scenario using the group descriptor shown in FIG. 9.

As shown in FIG. 10, it is supposed that the red button application (located at the left of FIG. 10) and IP service (main) belong to Group 1 and the IP service (main) and IP services (sub) belong to Group2. In this case, as shown in FIG. 11, while the red button application (for example, auto-start application) is being executed, a main application corresponding to IP service (main) is preloaded. Accordingly, it is advantageous in that the main application can be loaded and processed more promptly.

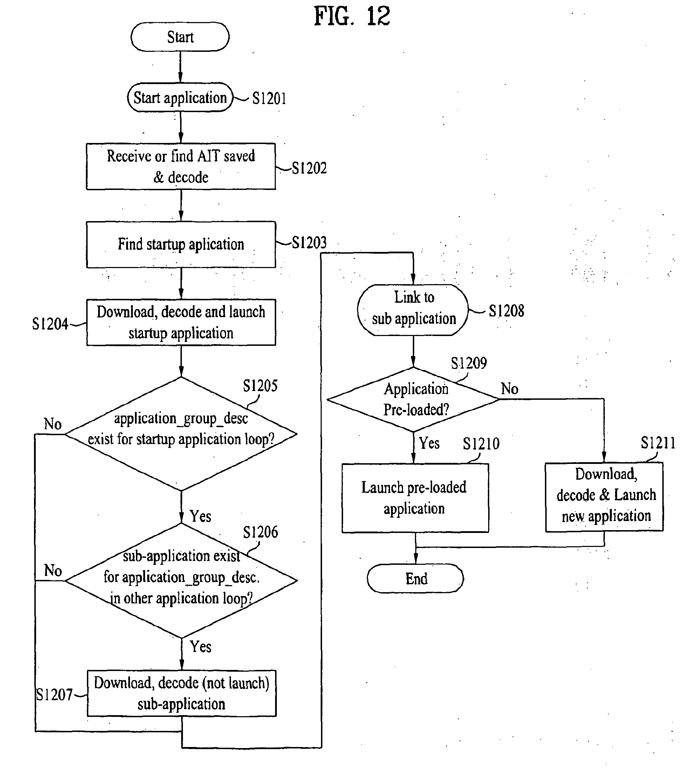

FIG. 12 is a flow chart illustrating a service scenario using the group descriptor shown in FIG. 9. Referring to FIG. 12, steps of preloading sub applications from the process of signaling AIT will be described as follows.

As show in FIG. 12, the digital broadcast receiver according to one embodiment of the present invention receives a command for starting a random application (S1201). The digital broadcast receiver receives AIT (S1202), and finds a startup application (S1203). The digital broadcast receiver downloads, decodes and launches the startup application (S1204).

The digital broadcast receiver determines whether the group descriptor exists within the AIT (S1205). As a result, if the group descriptor exists within the AIT, the digital broadcast receiver determines whether a group descriptor within another application loop signals the sub application (S1206). As a result, if the sub application exists, the digital broadcast receiver downloads and decodes the sub application (however, the digital broadcast receiver does not launch the sub application) (S1207). The digital broadcast receiver is linked to the sub application (S1208).

The digital broadcast receiver determines whether the sub application is preloaded (S1209). As a result, if the sub application is preloaded, the digital broadcast receiver launches the preloaded sub application (S1210). On the other hand, if the sub application is not preloaded, the digital broadcast receiver downloads, decodes and launches a new application (S1211).

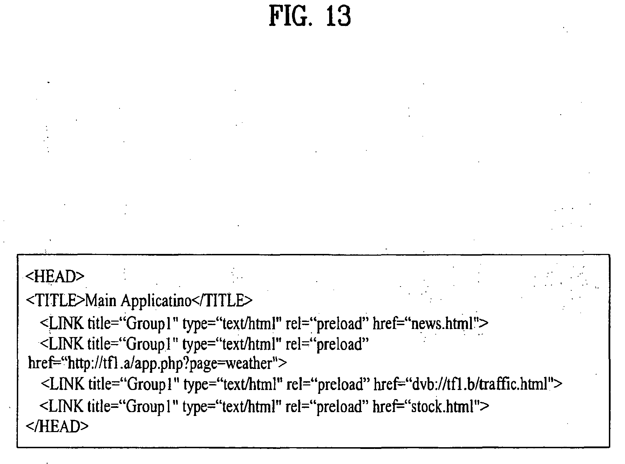

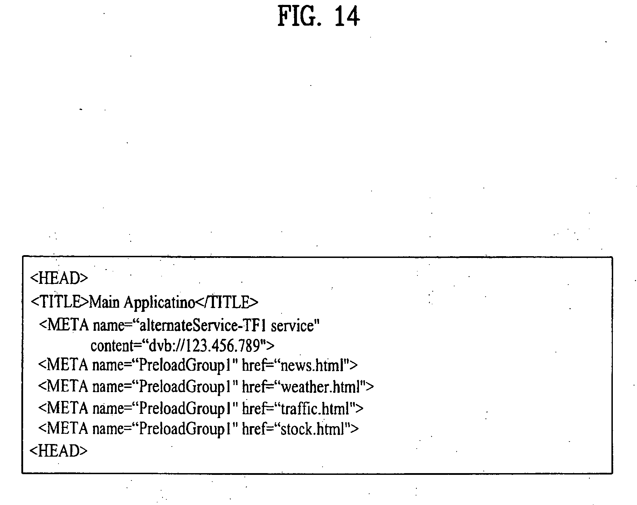

FIG. 13 is a diagram illustrating an example of signaling of group application information using HTML header in accordance with one embodiment of the present invention. FIG. 14 is a diagram illustrating another example of signaling of group application information using HTML header in accordance with one embodiment of the present invention.

In case of FIG. 13 and FIG. 14, unlike the aforementioned description, an element is added to HEAD section of the HTML page to signal group application information. In particular, FIG. 13 illustrates that preloading application is signaled by link element while FIG. 14 illustrates that preloading application is signaled by meta element.

First of all, URL (for example, HTML, AIT, or XML) of application that requires preloading is provided using href attributes of the link element shown in FIG. 13. Examples of the URL include absolute address or relative address. Moreover, as shown in FIG. 13, type attribute describes information of a type of preloading application while ref attribute describes information of preloading. Accordingly, as shown in FIG. 13, a plurality of applications for preloading can be signaled using a plurality of link elements.

The aforementioned description of FIG. 13 can equally be applied to FIG. 14. However, FIG. 13 is different from FIG. 14 in that link element is used in FIG. 13 whereas meta element is used in FIG. 14.

Meanwhile, since the HTML page is used for both DSM-CC (dvb://∼) and IP (http://∼), the elements shown in FIG. 13 and FIG. 14 can be applied to the aforementioned two protocols.

According to the aforementioned embodiments (see FIG. 1 to FIG. 14) of the present invention, the application group that includes one or more applications can be signaled promptly and easily. Moreover, according to another embodiment of the present invention, if a plurality of signaled applications or application groups exist, a method for providing a user with the plurality of applications or application groups in a customized type will be suggested. Hereinafter, the method will be described in more detail.

Terms used herein can basically be interpreted as follows. However, if other description is provided herein, the terms used herein may be interpreted in accordance with the description.

The applications may be defined as a collection of documents constituting an interactive service and the documents correspond to at least one of HTML (hypertext markup language), JavaScript, CSS (cascading style sheet), XML (extensible markup language) or multimedia files.

The control code in the AIT data may provide information on an activation state of applications.

The digital broadcast receiver may display automatically an indicator that there is an accessible application if a value of the control code corresponds to the autostart.

The digital broadcast receiver may display no indicator even though there is an accessible application if a value of the control code corresponds to the present.

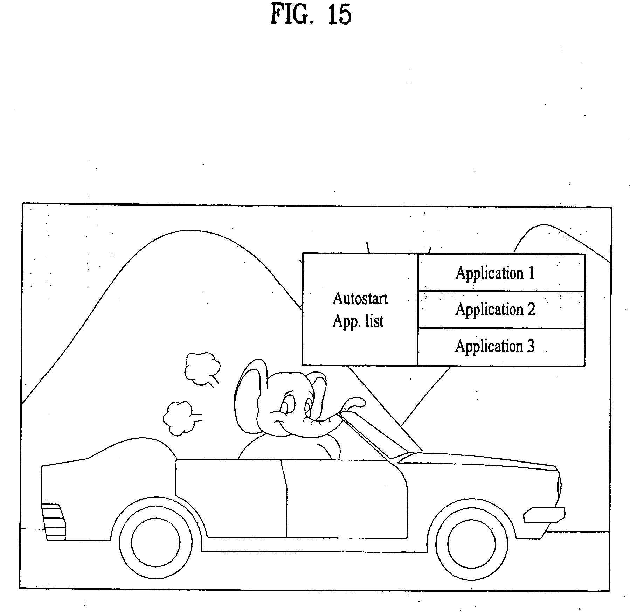

FIG. 15 is a diagram illustrating a first embodiment where a list of a plurality of applications is displayed in accordance with one embodiment of the present invention.

Referring to FIG. 15, the control code of the AIT displays a list of applications set with autostart. Moreover, the list shown in FIG. 15 can be designed in such a manner that the list is displayed in case of three cases as follows.

First, if the red button displayed on the screen of the digital broadcast receiver is selected, the list shown in FIG. 15 is displayed. Second, if an application list key separately added to a remote controller is selected, the list shown in FIG. 15 is displayed. Third, if two program selection buttons (for example, P+ and P-) are selected, the list shown in FIG. 15 is displayed. The red button serves as an indicator indicating that accessible application exists.

The first case will be described in more detail.

If there exist two or more applications to be executed with autostart (i.e., the case where control code of AIT corresponds to autostart and two or more applications having the same priority exists) and the red button is pushed, a list indicating or identifying the plurality of applications is displayed.

Alternatively, if the red button is selected when no application is executed, a list of all autostart applications including applications having low priority may be displayed.

The second case will be described in more detail.

As a separate key for commanding to display the application list is allocated to a remote controller or other input unit, if the separate key is selected, the list of FIG. 15 is displayed.

The third case will be described in more detail.

As two program selection buttons that can select application in an up/down type are supported in a remote controller or other input unit, if the buttons are pushed, the list of FIG. 15 is displayed. This process is especially useful if there is no application which is currently in service. This is because that it is difficult for the user to select whether to move to what application. Moreover, after the list shown in FIG. 15 is displayed, if the button P+ is selected, the user moves to the application located on the current application. On the other hand, if the button P- is selected, the user moves to the application located under the current application.

Also, the aforementioned applications are signaled through the AIT, and the digital broadcast receiver can acquire application that can be executed within the current channel or service and information of application group, by parsing the AIT. This process is classified into four steps, for example, as follows.

First, the digital broadcast receiver is tuned to a random channel (service).

Second, the digital broadcast receiver receives AIT data from the channel.

Third, the digital broadcast receiver parses the AIT data and generates a list of applications.

Fourth, if there are a plurality of accessible applications, the application list generated in the third step is displayed.

Meanwhile, as a method for generating the application list in the third step, various examples can be provided.

First of all, applications are arranged in due order by using the control code and priority included in the AIT or the descriptor of the AIT. In more detail, if the control code is autostart or present, since the corresponding applications can be used while the channel (service) is being used, they are arranged in accordance with priority.

Also, as another example, a list is generated by application groups only, and then main application of each group is only displayed on the list. Sub applications dependent on the main application are also displayed on the list if necessary.

Furthermore, as other example, if an application usage descriptor exists in the AIT, the list may be generated after applications are classified based on the application usage descriptor.

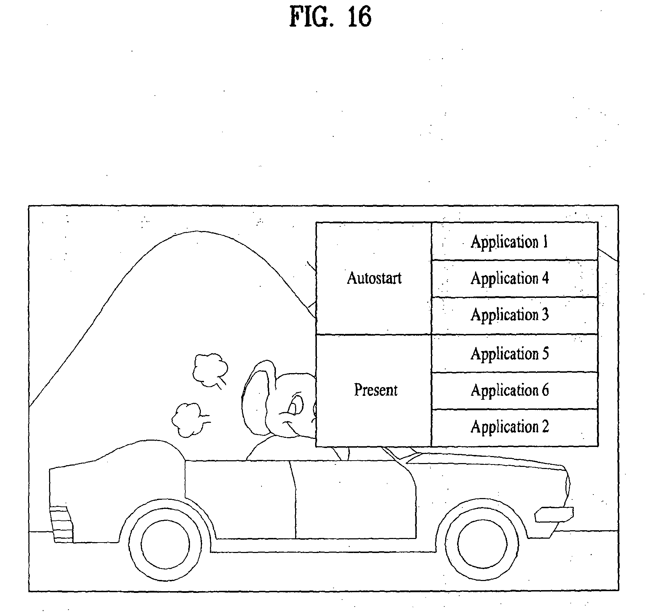

FIG. 16 is a diagram illustrating a second embodiment where a list of a plurality of applications is displayed in accordance with one embodiment of the present invention.

FIG. 16 suggests that an application list is generated and displayed based on the control code and priority. If the application list is designed as shown in FIG. 16, applications with a control code of present, as well as applications with a control code of autostart, may also be selected easily by the user. Moreover, it is advantageous in that applications which has a control code of autostart but cannot be executed automatically due to low priority can be identified in a state that they are included in the list as shown in FIG. 16.

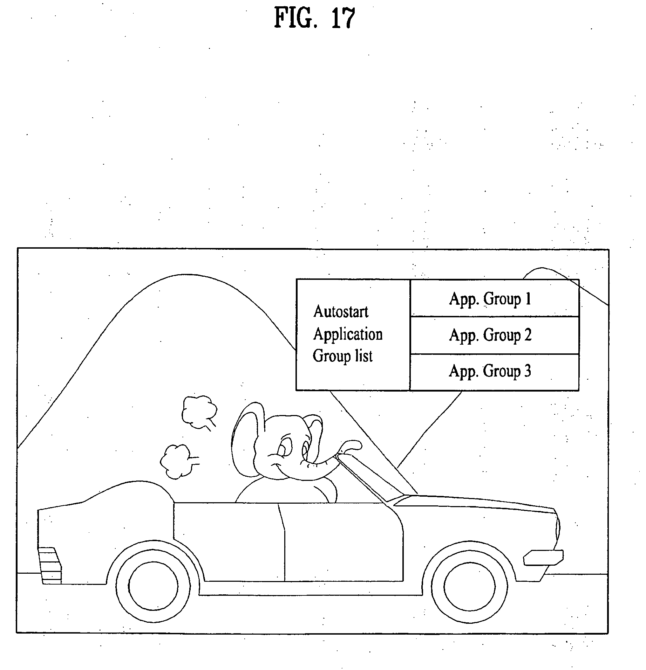

FIG. 17 is a diagram illustrating a third embodiment where a list of a plurality of applications is displayed in accordance with one embodiment of the present invention.

FIG. 17 suggests that an application list is generated in a unit of application group. If the application is designed as shown in FIG. 17, the list is generated in a unit of application group. If each group is selected, the main application of the selected group is executed. In case of application having no group information, the application may be regarded and processed as a random group.

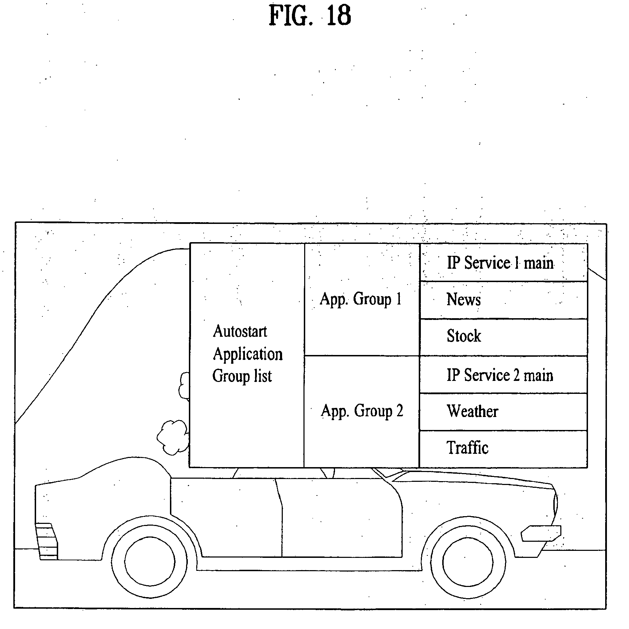

FIG. 18 is a diagram illustrating a fourth embodiment where a list of a plurality of applications is displayed in accordance with one embodiment of the present invention.

FIG. 18 suggests another method for generating an application list in a unit of application group. Unlike FIG. 17, the method of FIG. 18 is advantageous in that sub applications as well as main application of each group are directly accessible. For example, as shown in FIG. 18, main application of application group 1 is "IP service 1 main", and sub applications are "news" and "stock". Accordingly, the user can directly access the sub application by using the list shown in FIG. 18 without through the main application.

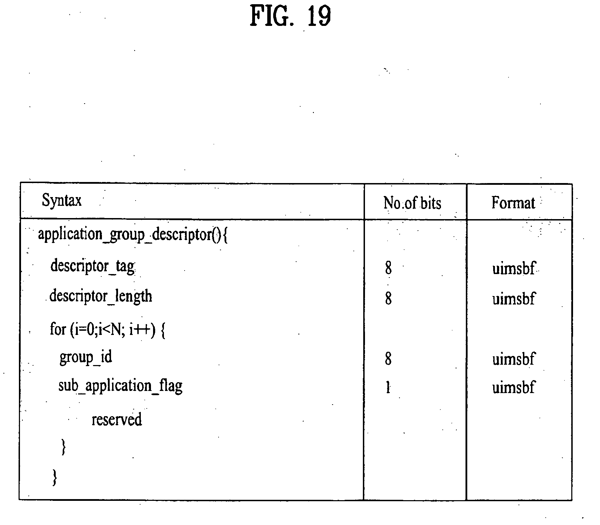

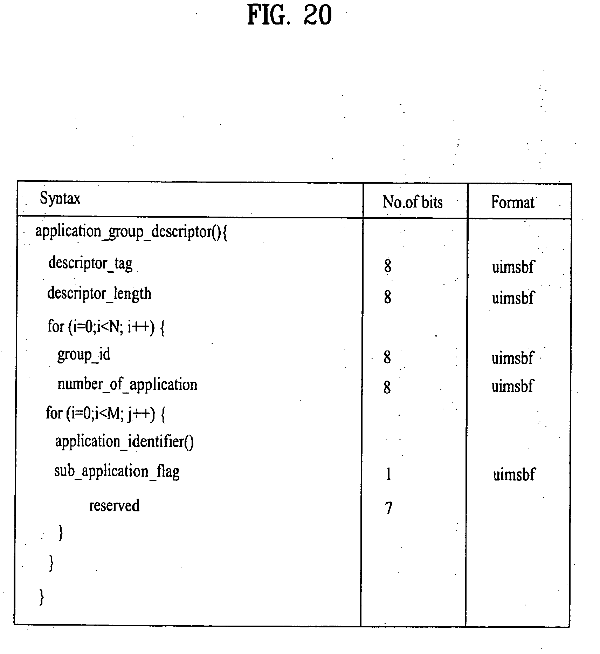

As described above, in order to generate and display the list in a unit of group, the group descriptor of the aforementioned AIT can be used. In particular, since the list of sub applications is directly signaled in FIG. 9, main application and sub applications within the group can directly be identified. However, since there is no method for identifying main application and sub applications in FIG. 3 and FIG. 4, a main application flag is added under the group_id field, whereby the sub applications and the main application can be identified. For example, if the main application flag has a field value of 0, it defines that corresponding application is main application. If the main application flag has a field value of 1, it defines that corresponding application is sub application. In particular; FIG. 19 illustrates that the group descriptor of FIG. 13 is enlarged, and FIG. 20 illustrates that the group descriptor of FIG. 14 is enlarged.

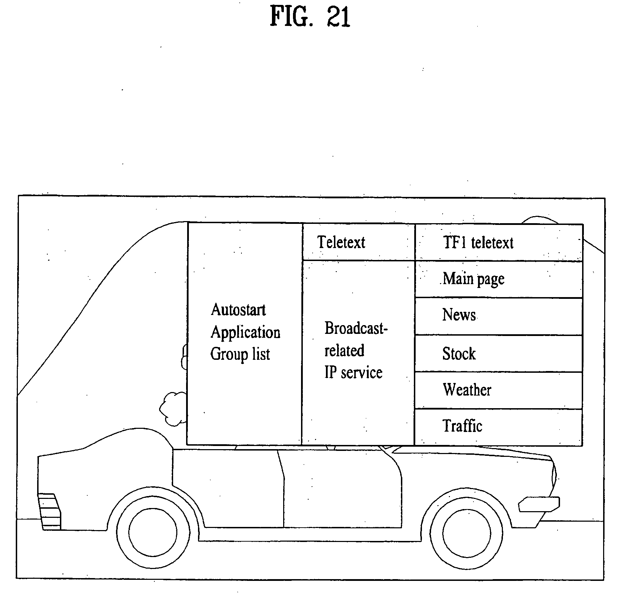

FIG. 21 is a diagram illustrating a fifth embodiment where a list of a plurality of applications is displayed in accordance with one embodiment of the present invention.

FIG. 21 illustrates that an application list is displayed in a unit of application usage. In more detail, the application list is generated by two application usages, for example, teletext and broadcast-related IP service. Accordingly, it is advantageous in that the user can easily identify and access applications arranged for each category.

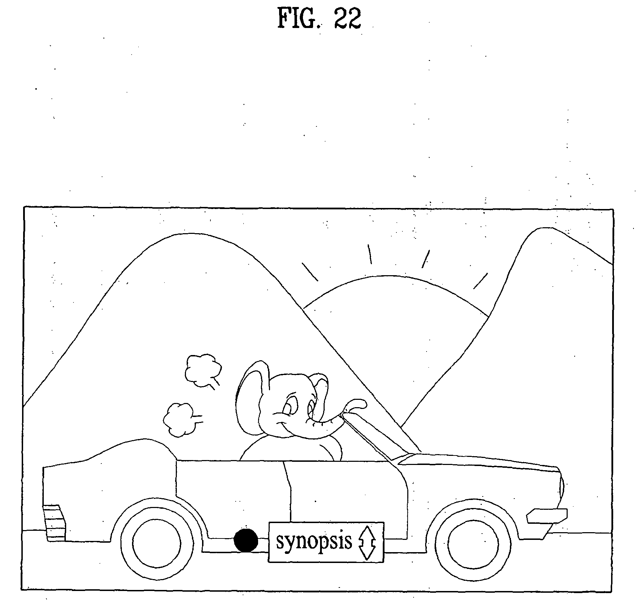

FIG. 22 is a diagram illustrating detailed information of application in accordance with one embodiment of the present invention.

Unlike the aforementioned description where a list of a plurality of applications is displayed, FIG. 22 suggests a method for providing detailed information of corresponding application.

As shown in FIG. 22, if accessible application exists, the red button is displayed on the screen, and name information (for example, synopsis) of application is together displayed next to the red button. Moreover, bidrectional arrows shown in FIG. 22 can indicate that a plurality of accessible applications exist. For example, if the user finds out a desired application in the middle of searching a plurality of applications by using the aforementioned two program selection buttons, the user can identify the desired application more promptly by pushing the red button.

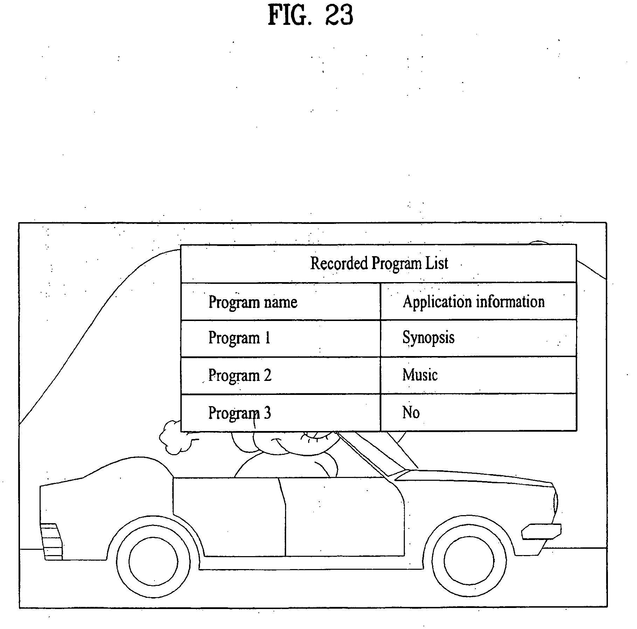

FIG. 23 is a diagram illustrating a sixth embodiment where a list of a plurality of applications is displayed in accordance with one embodiment of the present invention.

If a general broadcast program is recorded, application where control code of the AIT is set with playback autostart is stored. Accordingly, when the recorded broadcast program is played back later, the application should be executed. Even though the recorded broadcast program is played back as described above, the stored application list is displayed as shown in FIG. 23.

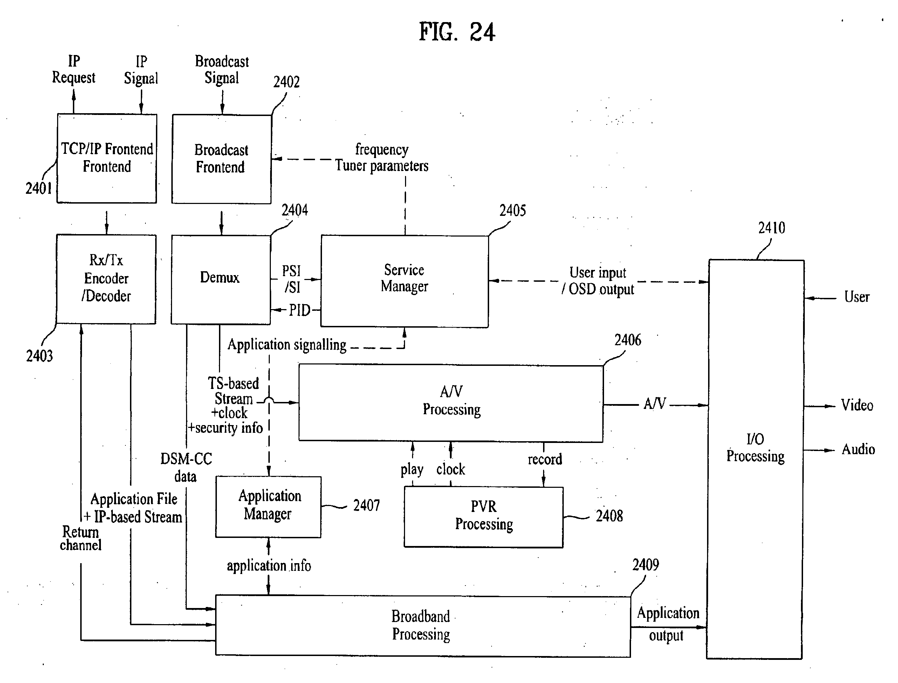

FIG. 24 is a diagram illustrating a digital broadcast receiver according to one embodiment of the present invention.

As shown in FIG. 24, the digital broadcast receiver according to one embodiment of the present invention includes a network frontend 2401, a broadcast frontend 2402, a TCP/IP decoder 2403, a system decoder 2404, a service manager 2405, an AN processing 2406, an application manager 2407, a PVR processing 2408, a broadband processing 2409, and an I/O processing 2410.

The network frontend 2401 receives IP data requested by the broadband processing 2409 or transmits response information of the digital broadcast receiver to a specific IP address.

The broadcast frontend 2402 receives a broadcast signal in accordance with frequency and tuning parameter set by the service manager 2405, decodes the broadcast signal in a proper type in accordance with a transmission mode, and outputs transport streams (TS).

The TCP/IP decoder 2403 decodes IP signal and transfers the decoded IP signal to the broadband processing 2409.

The system decoder 2404 receives a corresponding packet from the service manager 2405 in accordance with PID information, and outputs signaling section information or A/V/Data packets by decoding the corresponding packet. The signaling section information is transferred to the service manager 2405, A/V to the A/V processing 2406, and Data(DSM-CC) to the broadband processing 2409.

The service manager 2405 serves to control a system for all services provided by a service provider. The service manager 2405 controls all services in accordance with a service list and access information based on PSI/SI information. Also, the service manager 2405 manages tuner control information such as frequency, guard interval, etc., which are transferred as PSI/SI information, and performs a process (for example, channel change) of channel related user input service and EPG.

The A/V processing 2406 decodes, scrambles, and synchronizes A/V streams, and then transmits the resultant data to the I/O processing 2410.

The application manager 2407 takes data from related IP address in accordance with application signaling information transferred from the service manager 2405, selects application loaded/executed by the broadband processing 2409, and manages a life cycle.

The PVR processing 2408 takes the role of a function related with PVR (DVR). For example, the PVR processing 2408 takes the role of a control function related to storing and playing back streams. When the streams are recorded, the PVR processing 2408 attaches information, such as timestamp and random access point, to the AN streams. When the streams are played back, the PVR processing 2408 transfers the A/V streams to the A/V decoder together with the information such as timestamp and random access point.

The broadband processing 2409 decodes the packets to the TCP/IP protocol in accordance with an encoded protocol, processes the packets in accordance with contents type, and transfers the packets to the I/O processing 2410.

The I/O processing 2410 is related to user input and A/V output. The I/O processing 2410 processes user input, takes the role of EPG and OSD control, and performs audio and video output.

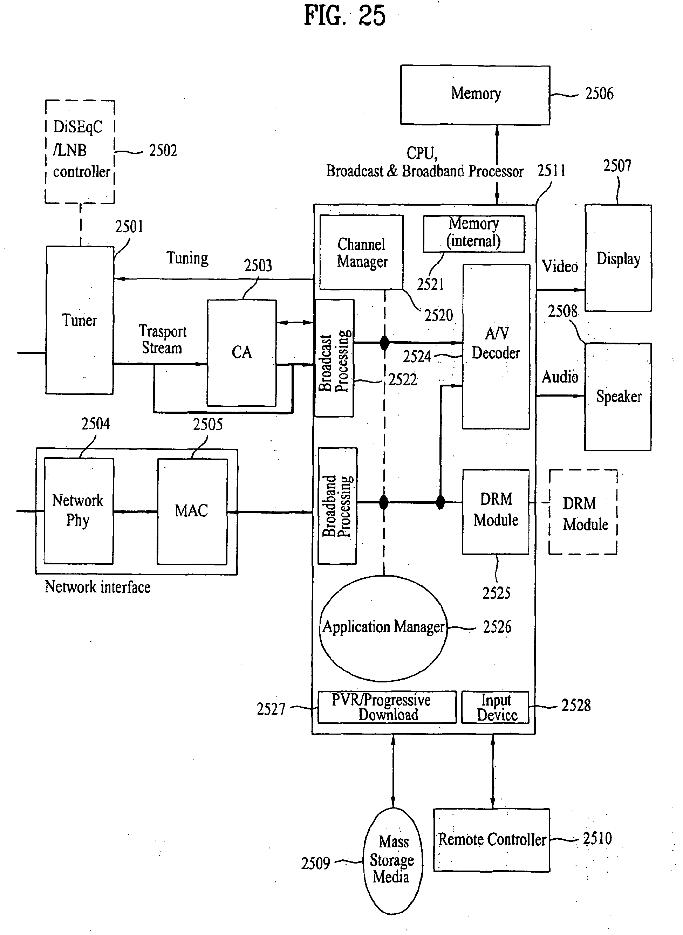

FIG. 25 is a diagram illustrating a digital broadcast receiver according to another embodiment of the present invention.

As shown in FIG. 25, the digital broadcast receiver according to another embodiment of the present invention includes a tuner 2501, a DiSEqC/LNB controller 2502, a CA 2503, a Network Phy 2504, a MAC 2505, a Memory 2506, a Display 2507, a Speaker 2508, a Mass Storage Media 2509, a Remote Controller 2510, and a CPU, Broadcast & Broadband Processor 2511.

The tuner 2501 receives a broadcast signal in accordance with frequency and tuning parameter, which are previously set.

The DiSEqC/LNB controller 2502 sets and controls receiving frequency and parameter of an antenna for receiving satellite broadcast from a satellite broadcast receiver.

The CA 2503 means a condition access module, and descrambles scrambled streams in accordance with the previously set authority or performs various kinds of processing in accordance with the previously set condition.

The Network Phy 2504 is an interface for accessing an Internet network.

The MAC 2505 receives a signal transmitted through the Internet network.

The Memory 2506 stores an initial booting code (for example, ROM), is used as a main memory (for example, RAM) for various kinds of operations, and stores nonvolatile information (for example, NVRAM) required for TV operation.

The Display 2507 output video information.

The Speaker 2508 output audio information.

The Mass Storage Media 2509 is to store large scaled media/files and PVR function such as HDD.

The Remote controller 2510 is a main interface unit for controlling a TV.

The CPU, Broadcast & Broadband Processor 2511 may correspond to a DTV main chipset, and may include CPU and DECODER. For example, the CPU, Broadcast & Broadband Processor 2511 further includes modules as follows.

A Channel manager 2520 stores/loads channel information and controls peripheral units.

A Memory (internal) 2521 is a small scaled memory for debugging and system management.

A Broadcast processing 2522 is a module to which broadcast streams are input.

A Broadband processing 2523 is a module to which internet packets are input.

An A/V decoder 2524 decodes audio/video packets and then transmits the decoded audio/video packets to an output module.

A DRM module 2525 decodes copy protection information of the input streams in accordance with authentication information.

An Application manager 2526 manages data/internet service application.

A PVR/Progressive Download module 2527 is a large scaled external controller. For example, the PVR/progressive Download module 2527 is involved in time shift and input and output process of recorded and downloaded contents.

An Input device 2528 processes an input signal of an external device, for example, remote controller.

According to FIG. 1 to FIG. 25 as described above, as associated applications are grouped and signaled, applications related to application which is currently loaded are previously downloaded, whereby the access speed can be increased remarkably. Also, as a related list is displayed on the screen, customized UI can be provided to the user.

It is to be understood that the person with ordinary skill in the art can implement the present invention through the aforementioned description without any problem. This will be described as follows.

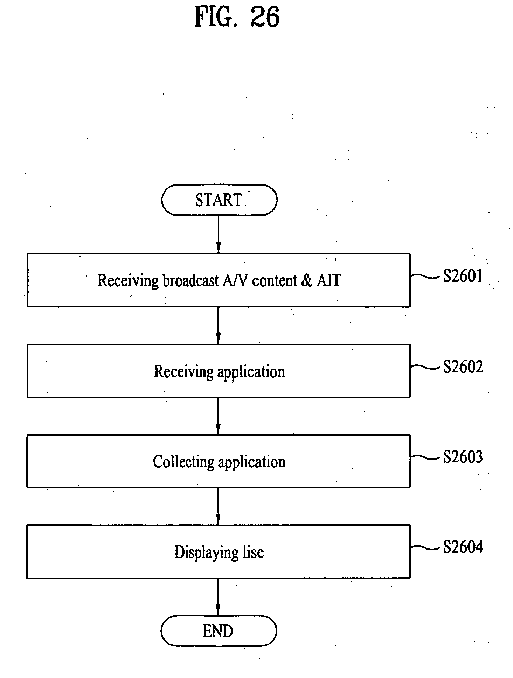

FIG. 26 is a flow chart illustrating a method for controlling a digital broadcast receiver according to one embodiment of the present invention.

As shown in FIG. 26, a digital broadcast receiver according to one embodiment of the present invention includes receives, from a broadcast network, a broadcast audio/video (A/V) content and an application information table (AIT) data (S2601). In this case, the digital broadcast receiver is connected with an interactive network (for example, internet) as shown in FIG. 1, FIG. 24 and FIG. 25.

The digital broadcast receiver receives from an interactive network, at least one of applications (S2602). Moreover, the digital broadcast receiver collects applications included in the same group among the at least one of applications, wherein the same group corresponds to applications intended to be used together (S2603). And, the digital broadcast receiver displays a list indicating the collected applications (S2604).

Also, the digital broadcast receiver preloads the applications included in the same group among the at least one of applications, to process the applications more promptly.

Moreover; the digital broadcast receiver can be designed in such a manner that the step S2603 further includes parsing a group descriptor included in the AIT data and collecting applications included in the same group using the group descriptor.

The group descriptor comprises at least one of a field for a group identification, a field for the number of applications, or a field for an application identifier. Since the group descriptor has been described with reference to FIG. 3, FIG. 4, FIG. 9, FIG. 19, and FIG. 20, its detailed description will be omitted.

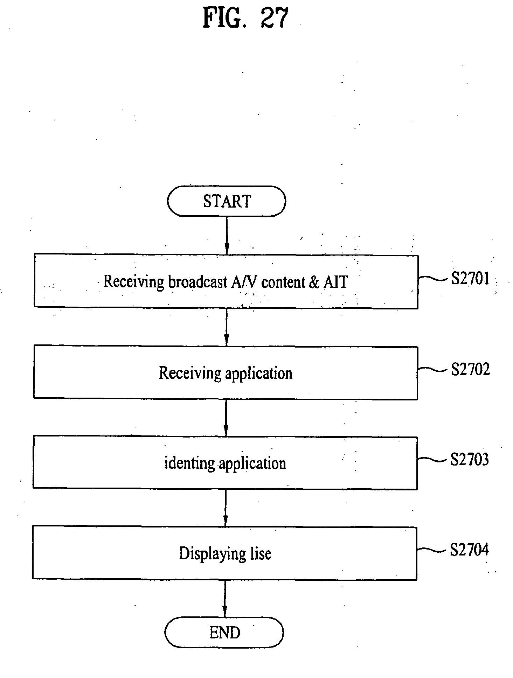

FIG. 27 is a flow chart illustrating a method for controlling a digital broadcast receiver according to another embodiment of the present invention.

As shown in FIG. 27, a digital broadcast receiver according to another embodiment of the present invention receives, from a broadcast network, a broadcast audio/video (A/V) content and an application information table (AIT) data (S2701). In this case, the digital broadcast receiver is connected with an interactive network (for example, internet) as shown in FIG. 1, FIG. 24 and FIG. 25.

The digital broadcast receiver receives, from an interactive network, at least one of applications (S2702). Moreover, the digital broadcast receiver identifies applications with a control code of autostart or present among the at least one of applications (S2703). And, the digital broadcast receiver displays a list indicating the identified applications (S2704).

According to another embodiment of the present invention, the step S2704 further includes displaying a colored indicator, determining whether there are multiple accessible applications if the colored indicator is selected, and displaying an additional list if there are multiple accessible applications. The colored indicator may be a red button, for example,

According to anther embodiment of the present invention, the step S2704 further includes controlling to arrange orders of the applications based on priorities of the applications, and displaying the list indicating the arranged applications.

Moreover, the aforementioned applications are defined as a collection of documents constituting an interactive service and the documents correspond to at least one of HTML (hypertext markup language), JavaScript, CSS (cascading style sheet), XML (extensible markup language) or multimedia files.

Moreover, the aforementioned control code in the AIT data provides information on an activation state of applications. For example, the digital broadcast receiver displays automatically an indicator that there is an accessible application if a value of the control code corresponds to the autostart. And, the digital broadcast receiver displays no indicator even though there is an accessible application if a value of the control code corresponds to the present.

Also, the step S2702 is performed using the AIT data. And, the step S2704 is performed while the A/V content is being displayed.

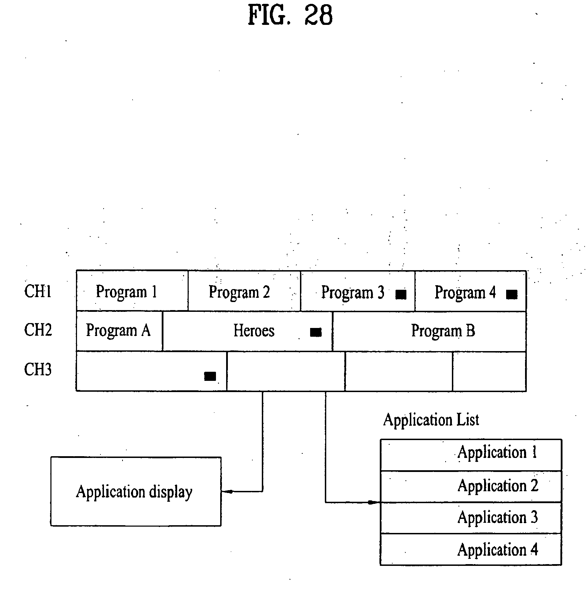

FIG. 28 is a diagram illustrating an electronic program guide (EPG) displayed in accordance with one embodiment of the present invention.

The aforementioned AIT can be signaled using PMT, for example. Accordingly, according to another embodiment of the present invention, when the EPG is displayed, as shown in FIG. 28, an indicator indicating whether application related to each program, service or channel exists is also displayed together with the EPG. If the indicator shown in FIG. 28 is selected, application may directly be displayed as shown in the lower left of FIG. 28, or a list of applications may be displayed as shown in the lower right of FIG. 28.

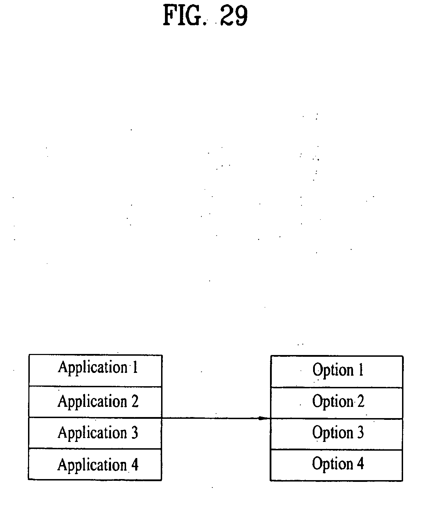

Also, if a specific application is selected as shown in FIG. 29, option 1 (for example, immediate execution), option 2 (for example, reservation of execution), option 3 (for example, reservation of storage), option 4 (for example, payment), and option 5 (for example, preview) may be provided.

In other words, according to one embodiment of the present invention, the digital broadcast receiver additionally displays an EPG (electronic program guide) on the broadcast A/V content, wherein the EPG has an indicator indicating that there is at least one application, displaying the application if there is single application and selected the indicator, and displaying an additional list if there is multiple application and selected the indicator.

Moreover, the digital broadcast receiver according to one embodiment of the present invention includes a first receiving unit, a second receiving unit, a controller, and a displaying unit.

The first receiving unit receives, from a broadcast network, a broadcast audio/video (A/V) content and an application information table (AIT) data. The first receiver unit can be implemented by 2402 shown in FIG. 24 or 2501 shown in FIG. 25, for example.

Also, the second receiving unit receives, from an interactive network, at least one of applications. The second receiving unit can be implemented by 2402 shown in FIG. 24 or 2501 shown in FIG. 25, for example.

Also, the controller identifies applications with a control code of autostart or present among the at least one of applications. The controller can be implemented by 2407 shown in FIG. 24 or 2511 shown in FIG. 25, for example.

The displaying unit displays a list indicating the identified applications. The displaying unit can be implemented by 2410 shown in FIG. 24 or 2507 shown in FIG. 25, for example.

Meanwhile, the digital broadcast receiver according to another embodiment of the present invention includes a first receiving unit, a second receiving unit, a controller, and a displaying unit.

The first receiving unit receives, from a broadcast network, a broadcast audio/video (A/V) content and an application information table (AIT) data. The first receiver unit can be implemented by 2402 shown in FIG. 24 or 2501 shown in FIG. 25, for example.

Also, the second receiving unit receives, from an interactive network, at least one of applications. The second receiving unit can be implemented by 2401 shown in FIG. 24 or 2504 shown in FIG. 25, for example.

Also, the controller collects applications included in the same group among the at least one of applications, wherein the same group corresponds to applications intended to be used together. The controller can be implemented by 2407 shown in FIG. 24 or 2511 shown in FIG. 25, for example.

The displaying unit displays a list indicating the collected applications. The displaying unit can be implemented by 2410 shown in FIG. 24 or 2507 shown in FIG. 25, for example.

For example, the receiver corresponds to at least one of IPTV (internet protocol television), BBTV (broadband television), or HBBTV (hybrid broadband television).

Meanwhile, although described for each drawing, features of the present invention, which are shown in each drawing, may be combined with one another as the case may be to implement another invention.

The method according to the present invention can be implemented in a program instruction type that can be performed through various computer means and can be recorded in a computer readable recording medium. The computer readable recording medium can include program instructions, data files, and data structures, alone or in combination. The program instructions recorded in the computer readable recording medium are designed specially for the present invention but may be well known to those skilled in the computer software. Examples of the computer readable recording medium include magnetic media such as hard disks, floppy disks, and magnetic tapes, optical media such as CD-ROM and DVD, magneto-optical media such as floppy disks, and a hardware device such as ROM, RAM, and flash memory, which is configured to store and perform program instructions. Examples of the program instructions include a machine language code made by a compiler and a high-level language code implemented using an interpreter by a computer. The hardware device can be configured as at least one software module to perform the operation of the present invention.

It will be apparent to those skilled in the art that the present invention can be embodied in other specific forms without departing from the spirit and essential characteristics of the invention. Thus, the above embodiments are to be considered in all respects as illustrative and not restrictive. The scope of the invention should be determined by reasonable interpretation of the appended claims and all change which comes within the equivalent scope of the invention are included in the scope of the invention.

### MODE FOR CARRYING OUT THE INVENTION

As described above, matters related to the best mode for carrying out the invention have been described.

### INDUSTRIAL APPLICABILITY

As described above, the present invention can be applied to a digital broadcast system entirely or partially.

## Claims

1. A method of processing applications corresponding to a collection of documents constituting an interactive service in a digital broadcast receiver connected with an interactive network, the method comprising:
receiving (S2601), from a broadcast network, a broadcast audio/video, A/V, content and an application information table, AIT, comprising a group descriptor having a group_id, wherein the step of receiving the AIT further comprises,
receiving (S2602) a program map table, PMT, with application signaling descriptor to identify the service component carrying the AIT from the broadcast network, wherein the AIT and PMT is transmitted in an MPEG stream,
parsing the PMT with application signaling descriptor, and
receiving the AIT by using the parsed PMT with application signaling descriptor;
receiving, from an interactive network, at least one of applications, wherein the interactive network is different from the broadcast network;
collecting (52603) applications having the same value of the group_id among the at least one of applications, wherein the applications having the same value of the group_id corresponds to applications intended to be used together; and
displaying (S2604) a list indicating the collected applications.

2. The method of claim 1, further comprising:
preloading the applications included in the same value of the group_id among the at least one of applications.

3. The method of claim 1, wherein the step of collecting comprises:
parsing a group descriptor included in the AIT data; and
collecting applications included in the same value of the group_id using the group descriptor.

4. The method of claim 3, wherein the group descriptor comprises at least one of a field for a group identification, a field for the number of applications, or a field for an application identifier.

## Patentansprüche

1. Verfahren zum Verarbeiten von Anwendungen entsprechend einer Sammlung von Dokumenten, die einen interaktiven Dienst in einem digitalen Rundsendungsempfänger bilden, der mit einem interaktiven Netzwerk verbunden ist, wobei das Verfahren umfasst:
Empfangen (S2601), von einem Rundsendungsnetzwerk, eines Rundsendungsaudio/video-, A/V, -inhalts und einer Anwendungsinformationstabelle, AIT, die einen Gruppendeskriptor mit einer Gruppen-ID umfasst, wobei der Schritt des Empfangens der AIT weiterhin umfasst
Empfangen (S2602) einer Programmkennfeldtabelle, PMT, mit einem Anwendungssignalisierungsdeskriptor, um die Dienstkomponente zu identifizieren, die die AIT trägt, aus dem Rundsendungsnetzwerk, wobei die AIT und die PMT in einem MPEG-Strom gesendet werden,
Parsen der PMT mit dem Anwendungssignalisierungsdeskriptor und
Empfangen der AIT unter Verwendung der geparsten PMT mit dem Anwendungssignalisierungsdeskriptor;
Empfangen, von einem interaktiven Netzwerk, von zumindest einer der Anwendungen, wobei das interaktive Netzwerk von dem Rundsendungsnetzwerk verschieden ist;
Sammeln (S2603) von Anwendungen mit demselben Wert der Gruppen-ID unter der zumindest einen Anwendung, wobei die Anwendungen mit demselben Wert der Gruppen-ID Anwendungen entsprechen, deren gemeinsame Verwendung beabsichtigt ist;
Anzeigen (S2604) einer Liste, die die gesammelten Anwendungen angibt.

2. Verfahren gemäß Anspruch 1, weiterhin umfassend:
Vorladen der Anwendungen, die in demselben Wert der Gruppen-ID umfasst sind, unter der zumindest einen Anwendung.

3. Verfahren gemäß Anspruch 1, wobei der Schritt des Sammelns umfasst:
Parsen eines Gruppendeskriptors, der in den AIT-Daten umfasst ist; und
Sammeln von Anwendungen, die in demselben Wert der Gruppen-ID unter Verwendung des Gruppendeskriptors umfasst sind.

4. Verfahren gemäß Anspruch 3, wobei der Gruppendeskriptor zumindest eines aus einem Feld für eine Gruppenidentifikation, einem Feld für die Anzahl von Anwendungen oder einem Feld für eine Anwendungskennung umfasst.

## Revendications

1. Procédé de traitement d'applications correspondant à une collection de documents constituant un service interactif dans un récepteur de diffusion numérique connecté avec un réseau interactif, le procédé comprenant :
la réception (S2601), d'un réseau de diffusion, d'un contenu audio/vidéo, A/V, diffusé et d'une table d'informations d'applications, AIT, comprenant un descripteur de groupe ayant un ID de groupe, dans lequel l'étape de réception de l'AIT comprend en outre
la réception (S2602) d'une table de correspondances de programmes, PMT, avec un descripteur de signalisation d'applications pour identifier le composant de service comportant l'AIT provenant du réseau de diffusion, dans lequel l'AIT et la PMT sont transmises dans un flux MPEG,
l'analyse syntaxique de la PMT avec le descripteur de signalisation d'applications, et
la réception de l'AIT en utilisant la PMT analysée syntaxiquement avec le descripteur de signalisation d'applications ;
la réception, d'un réseau interactif, d'au moins une parmi des applications, dans lequel le réseau interactif est différent du réseau de diffusion ;
la collecte (S2603) d'applications ayant la même valeur d'ID de groupe parmi l'au moins une des applications, dans lequel des applications ayant la même valeur d'ID de groupe correspondent à des applications destinées à être utilisées ensemble ; et
l'affichage (S2604) d'une liste indiquant les applications collectées.

2. Procédé selon la revendication 1, comprenant en outre :
le pré-chargement des applications incluses dans la même valeur d'ID de groupe parmi l'au moins une des applications.

3. Procédé selon la revendication 1, dans lequel l'étape de collecte comprend :
l'analy se syntaxique d'un descripteur de groupe inclus dans les données d'AIT ; et
la collecte d'applications incluses dans la même valeur d'ID de groupe en utilisant le descripteur de groupe.

4. Procédé selon la revendication 3, dans lequel le descripteur de groupe comprend au moins un parmi un champ pour une identification de groupe, un champ pour le nombre d'applications ou un champ pour un identifiant d'application.
